# EUROPÄISCHE PATENTSCHRIFT

(11) **EP 3 369 967 B1**
(45) Veröffentlichungstag und Bekanntmachung des Hinweises auf die Patenterteilung: **16.09.2020**
(21) Anmeldenummer: 17195239.3
(22) Anmeldetag: 06.10.2017
(51) Int. Cl.: F16H 48/06

(54) **DIFFERENTIAL FÜR EIN KRAFTFAHRZEUGGETRIEBE**
DIFFERENTIAL FOR A MOTOR VEHICLE TRANSMISSION
DIFFÉRENTIEL POUR UNE TRANSMISSION DE VÉHICULE AUTOMOBILE

(30) Priorität: 02.03.2017 DE 102017203423
(43) Veröffentlichungstag der Anmeldung: 05.09.2018
(73) Patentinhaber: ZF Friedrichshafen AG, 88046 Friedrichshafen (DE)
(72) Erfinder: Holst, Sven, 88074 Meckenbeuren (DE)
(74) Vertreter: ZF Friedrichshafen AG

(56) Entgegenhaltungen:
- WO-A1-2015/149874
- DE-A1-102009 055 867

## Beschreibung

Die Erfindung betrifft ein Differential für ein Kraftfahrzeuggetriebe. Die Erfindung betrifft ferner ein Kraftfahrzeuggetriebe mit einem solchen Differential sowie einen Antriebsstrang. Ein Kraftfahrzeuggetriebe bezeichnet hier insbesondere ein mehrgängiges oder stufenloses Getriebe, mittels dem eine Vielzahl von Übersetzungsverhältnissen zwischen einer Antriebswelle und einer Abtriebswelle des Getriebes schaltbar sind. Derartige Getriebe finden vor allem in Kraftfahrzeugen Anwendung, um die Drehzahl- und Drehmomentabgabecharakteristik einer Antriebseinheit den Fahrwiderständen des Fahrzeugs in geeigneter Weise anzupassen.

Die Patentanmeldung DE 10 2008 017 221 A1 zeigt ein Differential mit einem antreibbaren Gehäuse, einem Paar Achskegelräder und einem Paar Ausgleichskegelräder. Die Achskegelräder weisen eine Verzahnung auf, welche abhängig von der Ausführungsform als Innenverzahnung oder als Außenverzahnung ausgeführt ist. Die Verzahnungen dienen als drehmomentübertragende Schnittstelle zu Innennaben von Kugelgleichlaufgelenken, welche Bestandteil von Antriebswellen zu Antriebsrädern eines Kraftfahrzeugs sind.

Außerdem zeigt die DE 10 2009 055 867 A1 ein Differential mit zwei Abtriebswellen.

Es ist Aufgabe der Erfindung das im Stand der Technik bekannte Differential weiterzuentwickeln, sodass dessen Bauraumbedarf für die Anwendung in einem Kraftfahrzeuggetriebe optimiert wird.

Die Aufgabe wird gelöst durch die Merkmale des Patentanspruchs 1. Vorteilhafte Ausgestaltungen ergeben sich aus den abhängigen Ansprüchen, der Beschreibung sowie aus den Figuren.

Zur Lösung der Aufgabe wird ein Differential für ein Kraftfahrzeuggetriebe vorgeschlagen, welches eine erste und eine zweite Abtriebswelle aufweist. Jede der Abtriebswellen weist eine drehmomentübertragende Schnittstelle zu einer Seitenwelle auf, beispielsweise eine Steckverzahnung. Die Seitenwellen sind nicht Bestandteil des Differentials und dienen zur Drehmomentübertragung zwischen der jeweiligen Abtriebswelle und je einem Antriebsrad eines Kraftfahrzeugs. Die drehmomentübertragende Schnittstelle der ersten Abtriebswelle ist als Innenverzahnung ausgebildet.

Erfindungsgemäß ist die drehmomentübertragende Schnittstelle der zweiten Abtriebswelle als Außenverzahnung ausgebildet. Die drehmomentübertragenden Schnittstellen der ersten und zweiten Abtriebswelle sind also voneinander unterschiedlich ausgestaltet. Durch die Außenverzahnung an der zweiten Abtriebswelle kann ein Außendurchmesser des Differentials lokal verringert werden. Dies ist besonders bei der Anwendung in einem Kraftfahrzeug mit quer zur Fahrtrichtung ausgerichtetem Antriebsstrang vorteilhaft, da bei einer derartigen Anordnung der zur Verfügung stehende Bauraum sehr begrenzt ist.

Vorzugsweise sind die erste und zweite Abtriebswelle an einem Differentialkorb drehbar geführt. Der Differentialkorb ist über ein erstes und zweites Lager drehbar gelagert. Das erste und zweite Lager sind bevorzugt als Wälzlager ausgebildet, welche dazu eingerichtet sind sowohl axial als auch radial wirkende Kräfte abzustützen. Mittels des ersten Lagers wird jene Seite des Differentialkorbs abgestützt, welche der ersten Abtriebswelle zugeordnet ist. Mittels des zweiten Lagers wird jene Seite des Differentialkorbs abgestützt, welche der zweiten Abtriebswelle zugeordnet ist. Das der zweiten Abtriebswelle zugeordnete Lager weist dabei einen kleineren Außendurchmesser auf als das erste Lager. Unter Außendurchmesser ist der Sitzdurchmesser eines Außenrings des Lagers zu verstehen. Durch den reduzierten Außendurchmesser des Lagers kann ein Außendurchmesser des Differentials lokal weiter verringert werden.

Gemäß einer bevorzugten Ausgestaltung ist die erste Abtriebswelle als Hohlwelle ausgebildet, während die zweite Abtriebswelle als Vollwelle ausgebildet ist. Die Ausbildung als Vollwelle ermöglicht einen besonders kleinen Durchmesser der zweiten Abtriebswelle. Dadurch kann ein Außendurchmesser des Differentials lokal weiter verringert werden.

Die ungleiche Ausgestaltung zwischen erster und zweiter Abtriebswelle bzw. die unterschiedliche Abstützung des Differentialkorbs ermöglicht eine Verringerung der Au-ßenabmessungen jener Seite des Differentials, welche der zweiten Abtriebswelle zugeordnet ist. Eine Ausdehnung der Maßnahmen auf die erste Abtriebswelle ist erfindungsgemäß bewusst nicht vorgesehen, da die dort größeren Außenabmessungen für Montage bzw. Lagerlebensdauer von Vorteil sind.

Das Differential kann vorzugsweise ein Bestandteil eines Kraftfahrzeuggetriebes sein. Das Differential kann in einem Gehäuse des Kraftfahrzeuggetriebes aufgenommen sein. In anderen Worten ist für das Differential kein eigenes Gehäuse vorgesehen. Das Kraftfahrzeuggetriebe mit dem erfindungsgemäßen Differential kann insbesondere für einen quer zur Fahrtrichtung eines Kraftfahrzeugs ausgerichteten Antriebsstrang vorgesehen sein.

Bevorzugt ist das zweite Lager an einem Abschnitt des Gehäuses abgestützt, welcher eine Kupplung, eine Doppelkupplung, eine Dreifachkupplung und/oder eine Vorrichtung des Kraftfahrzeuggetriebes zur Dämpfung oder Tilgung von Drehschwingungen zumindest teilweise umschließt. In anderen Worten trennt der Gehäuseabschnitt das zweite Lager von zumindest einem der vorgenannten Getriebekomponenten. Der lokal reduzierte Bauraumbedarf des Differentials erlaubt daher eine entsprechend große Ausgestaltung zumindest einer dieser Getriebekomponenten.

Vorzugsweise weist das Gehäuse des Kraftfahrzeuggetriebes eine Schnittstelle zu einem Verbrennungsmotor auf. Das zweite Lager ist näher zu dieser Schnittstelle angeordnet als das erste Lager. In anderen Worten handelt es sich bei der zweiten Abtriebswelle um jene Abtriebswelle, deren freies Ende dem Verbrennungsmotor zugewandt ist. Durch diese Zuordnung der zweiten Abtriebswelle und durch die lokal kompakte Ausgestaltung des Differentials kann dieses möglichst nah zum Verbrennungsmotor angeordnet werden. Dadurch kann die der ersten Abtriebswelle des Differentials zugeordnete Seitenwelle möglichst lang ausgeführt werden, wodurch der maximal auftretende Beugewinkel der entsprechenden Seitenwellengelenke reduziert wird.

Das erfindungsgemäße Differential oder das zuvor beschriebene Kraftfahrzeuggetriebe kann Bestandteil eines Antriebsstrangs für ein Kraftfahrzeug sein. Hierbei ist besonders die Anwendung in einem Hybridantriebsstrang vorteilhaft, da aufgrund der bei einem Hybridantriebsstrang zusätzlich erforderlichen Komponenten der zur Verfügung stehende Bauraum besonders knapp ist.

Ein Ausführungsbeispiel der Erfindung ist nachfolgend anhand der beigefügten Figuren detailliert beschrieben. Es zeigen:
- Fig. 1: einen Ausschnitt eines Kraftfahrzeuggetriebes mit einem erfindungsgemäß aufgebauten Differential; und
- Fig. 2: einen Antriebsstrang eines Kraftfahrzeugs.

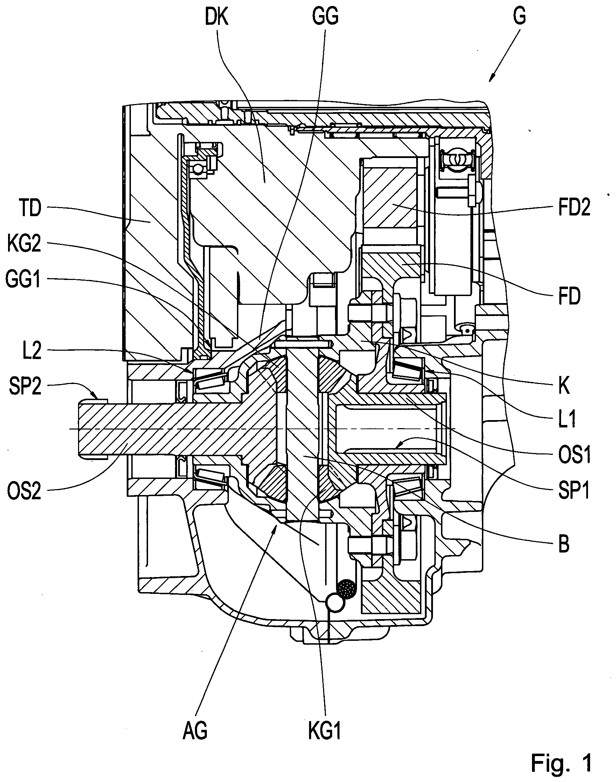

Fig. 1 zeigt einen Ausschnitt einer Schnittdarstellung eines Kraftfahrzeuggetriebes G mit einem erfindungsgemäß aufgebauten Differential AG. Das Differential AG weist einen zweiteiligen Differentialkorb K auf, dessen Hälften über eine Schraubverbindung miteinander verbunden sind. Über die Schraubverbindung ist zudem ein Antriebszahnrad FD mit dem Differentialkorb K drehfest verbunden. Das Antriebszahnrad FD kämmt mit einer Verzahnung FD2, welcher mit einer nicht näher dargestellten Abtriebswelle des Kraftfahrzeuggetriebes G verbunden ist. Der Differentialkorb K ist über ein erstes Lager L1 und über ein zweites Lager L2 an einem Gehäuse GG des Kraftfahrzeuggetriebes G drehbar gelagert. Ein Differentialbolzen B ist mit dem Differentialkorb K fest verbunden. Am Differentialbolzen B sind ein erstes und ein zweites Kegelrad KG1, KG2 drehbar gelagert. Jedes der Kegelräder KG1, KG2 kämmt mit einer Kegelverzahnung einer ersten Abtriebswelle OS1 und mit einer Kegelverzahnung einer zweiten Abtriebswelle OS2. Die Abtriebswellen OS1, OS2 sind an je einer Hälfte des Differentialkorbs K drehbar geführt. Die erste Abtriebswelle OS1 ist jener Hälfte des Differentialkorbs K zugeordnet, welche über das erste Lager L1 abgestützt ist. Die zweite Abtriebswelle OS2 ist jener Hälfte des Differentialkorbs K zugeordnet, welche über das zweite Lager L2 abgestützt ist.

Die zweite Abtriebswelle OS2 weist an ihrem der Kegelverzahnung abgewandten Ende am Außendurchmesser eine drehmomentübertragende Schnittstelle SP2 auf, welche als eine Steckverzahnung ausgebildet ist. Die Schnittstelle SP2 dient der Drehmomentübertragung zu einer in Fig. 1 nicht dargestellten Seitenwelle DS2. Die erste Abtriebswelle OS1 weist an ihrem der Kegelverzahnung abgewandten Ende am Innendurchmesser eine drehmomentübertragende Schnittstelle SP1 auf, welche als eine Steckverzahnung ausgebildet ist. Die Schnittstelle SP1 dient der Drehmomentübertragung zu einer in Fig. 1 nicht dargestellten Seitenwelle DS1. Die erste Abtriebswelle OS1 ist als Hohlwelle ausgebildet, während die zweite Abtriebswelle OS2 als Vollwelle ausgebildet ist.

Das zweite Lager L2 ist an einem Abschnitt GG1 des Gehäuses GG abgestützt, welches eine Doppelkupplungseinheit DK teilweise umschließt. Der Doppelkupplungseinheit DK ist ein Torsionsschwingungsdämpfer TD vorangeschaltet. Die Doppelkupplungseinheit DK und der Torsionsschwingungsdämpfer TD sind nur schematisch dargestellt. Der Gehäuseabschnitt GG1 trennt somit das zweite Lager L2 von einem Abschnitt der Doppelkupplungseinheit DK. Anstelle der Doppelkupplungseinheit DK kann an derselben Position eine einfache Kupplung oder eine Dreifachkupplungseinheit vorgehen sein. Ergänzend oder alternativ dazu kann an derselben Position ein weiterer Drehschwingungsdämpfer oder ein Drehschwingungstilger vorgesehen sein.

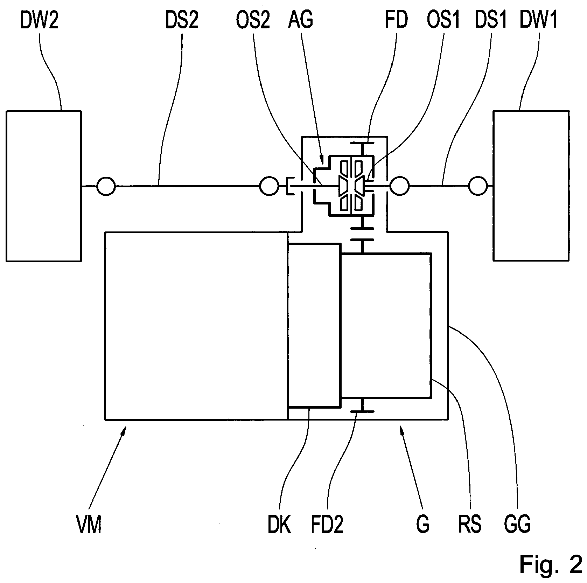

Fig. 2 zeigt schematisch einen Antriebsstrang eines Kraftfahrzeugs, welcher quer zur Fahrtrichtung des Kraftfahrzeugs ausgerichtet ist. Der Antriebsstrang weist einen Verbrennungsmotor VM sowie das Kraftfahrzeuggetriebe G auf. Das Gehäuse GG des Kraftfahrzeuggetriebes G ist über eine Schnittstelle G1 am Verbrennungsmotor VM befestigt. Das Kraftfahrzeuggetriebe G weist die Doppelkupplungseinheit DK sowie den nachgeschalteten Radsatz RS auf. Mittels des Radsatzes RS werden unterschiedliche Gangstufen bereitgestellt. An der Abtriebswelle des Radsatzes RS ist eine Abtriebsverzahnung FD2 ausgebildet, welche mit dem Antriebszahnrad FD des Differentialgetriebes AG kämmt. An die erste Abtriebswelle OS1 des Differentials AG ist eine erste Seitenwelle DS1 angeschlossen, mittels der Drehmoment an ein erstes Antriebsrad DW1 des Kraftfahrzeugs übertragbar ist. An die zweite Abtriebswelle OS2 des Differentials AG ist eine zweite Seitenwelle DS2 angeschlossen, mittels der Drehmoment an ein zweites Antriebsrad DW2 des Kraftfahrzeugs übertragbar ist.

Der in Fig. 2 dargestellte Antriebsstrang ist lediglich beispielhaft anzusehen. Die Abtriebsverzahnung FD2 könnte auf einer achsparallel zu Differential AG und Abtriebswelle angeordneten Zwischenwelle ausgebildet sein. Anstellte der Doppelkupplungseinheit könnte eine einzelne Kupplungseinheit oder eine Dreifachkupplungseinheit vorgesehen sein. Jede dieser Kupplungseinheiten könnte mit einer Vorrichtung zur Dämpfung oder Tilgung von Drehschwingungen ausgestattet sein.

### Bezugszeichen

- AG: Differential
- FD: Antriebszahnrad
- K: Differentialkorb
- L1: Erstes Lager
- L2: Zweites Lager
- B: Differentialbolzen
- KG1: Kegelrad
- KG2: Kegelrad
- OS1: Erste Abtriebswelle
- SP1: Schnittstelle
- OS2: Zweite Abtriebswelle
- SP2: Schnittstelle
- G: Kraftfahrzeuggetriebe
- GG: Gehäuse
- GG1: Gehäuseabschnitt
- G1: Schnittstelle
- DK: Doppelkupplungseinheit
- TD: Torsionsschwingungsdämpfer
- RS: Radsatz
- FD2: Verzahnung
- VM: Verbrennungsmotor
- DS1: Erste Seitenwelle
- DS2: Zweite Seitenwelle
- DW1: Erstes Antriebsrad
- DW2: Zweites Antriebsrad

## Patentansprüche

1. Differential (AG) für ein Kraftfahrzeuggetriebe (G), wobei das Differential (AG) eine erste Abtriebswelle (OS1) mit einer drehmomentübertragenden Schnittstelle (SP1) für eine erste Seitenwelle (DS1) und eine zweite Abtriebswelle (OS2) mit einer drehmomentübertragenden Schnittstelle (SP2) für eine zweite Seitenwelle (DS2) aufweist, wobei die drehmomentübertragende Schnittstelle (SP1) der ersten Abtriebswelle (OS1) als Innenverzahnung ausgebildet ist,
**dadurch gekennzeichnet, dass** die drehmomentübertragende Schnittstelle (SP2) der zweiten Abtriebswelle (OS2) als Außenverzahnung ausgebildet ist.

2. Differential (AG) nach Anspruch 1, **dadurch gekennzeichnet, dass** die erste und zweite Abtriebswelle (OS1, OS2) in einem Differentialkorb (K) drehbar geführt sind, welcher mittels eines ersten und eines zweiten Lagers (L1, L2) drehbar gelagert ist, wobei das erste Lager (L1) eine der ersten Abtriebswelle (OS1) zugeordnete Seite des Differentialkorbs (K) abstützt, wobei das zweite Lager (L2) eine der zweiten Abtriebswelle (OS2) zugeordnete Seite des Differentialkorbs (K) abstützt, wobei das zweite Lager (L2) einen kleineren Außendurchmesser aufweist als das erste Lager (L1).

3. Differential (AG) nach Anspruch 1 oder Anspruch 2, **dadurch gekennzeichnet, dass** die erste Abtriebswelle (OS1) als Hohlwelle ausgebildet ist, wobei die zweite Abtriebswelle (OS2) als Vollwelle ausgebildet ist.

4. Kraftfahrzeuggetriebe (G), **gekennzeichnet durch** ein Differential (AG) nach einem der Ansprüche 1 bis 3, welches in einem Gehäuse (GG) des Kraftfahrzeuggetriebes (G) aufgenommen ist.

5. Kraftfahrzeuggetriebe (G) nach Anspruch 4 unter Rückbezug auf Anspruch 2, **dadurch gekennzeichnet, dass** das zweite Lager (L2) an einem Abschnitt (GG1) des Gehäuses (GG) abgestützt ist, welcher eine Kupplung, eine Doppelkupplung, eine Dreifachkupplung und/oder eine Vorrichtung des Kraftfahrzeuggetriebes (G) zur Dämpfung oder Tilgung von Drehschwingungen zumindest teilweise umschließt.

6. Kraftfahrzeuggetriebe (G) nach Anspruch 4 oder 5, **dadurch gekennzeichnet, dass** das Kraftfahrzeuggetriebe (G) für einen quer zur Fahrtrichtung eines Kraftfahrzeugs ausgerichteten Antriebsstrang vorgesehen ist.

7. Kraftfahrzeuggetriebe (G) nach einem der Ansprüche 4 bis 6, **dadurch gekennzeichnet, dass** das Gehäuse (GG) eine Schnittstelle (G1) für einen Verbrennungsmotor (VM) aufweist, wobei das zweite Lager (L2) näher zur Schnittstelle (G1) angeordnet ist als das erste Lager (L1).

8. Antriebsstrang für ein Kraftfahrzeug, **gekennzeichnet durch** ein Differential (AG) nach einem der Ansprüche 1 bis 3 oder durch ein Kraftfahrzeuggetriebe (G) nach einem der Ansprüche 4 bis 7.

## Claims

1. Differential (AG) for a motor vehicle transmission (G), wherein the differential (AG) has a first output shaft (OS1) having a torque-transmitting interface (SP1) for a first side shaft (DS1), and a second output shaft (OS2) having a torque-transmitting interface (SP2) for a second side shaft (DS2), wherein the torque-transmitting interface (SP1) of the first output shaft (OS1) is configured as an internal toothing,
**characterized in that** the torque-transmitting interface (SP2) of the second output shaft (OS2) is configured as an external toothing.

2. Differential (AG) according to Claim 1, **characterized in that** the first output shaft (OS1) and the second output shaft (OS2) are guided so as to be rotatable in a differential cage (K) which is rotatably mounted by means of a first bearing (L1) and a second bearing (L2), wherein the first bearing (L1) supports a side of the differential cage (K) that is assigned to the first output shaft (OS1), wherein the second bearing (L2) supports a side of the differential cage (K) that is assigned to the second output shaft (OS2), wherein the second bearing (L2) has a smaller external diameter than the first bearing (L1).

3. Differential (AG) according to Claim 1 or 2, **characterized in that** the first output shaft (OS1) is configured as a hollow shaft, wherein the second output shaft (OS2) is configured as a solid shaft.

4. Motor vehicle transmission (G), **characterized by** a differential (AG) according to one of Claims 1 to 3, said differential (AG) being received in a housing (GG) of the motor vehicle transmission (G).

5. Motor vehicle transmission (G) according to Claim 4 while referring back to Claim 2, **characterized in that** the second bearing (L2) is supported on a portion (GG1) of the housing (GG) that at least partially encloses a clutch, a double clutch, a triple clutch, and/or a device of the motor vehicle transmission (G) for damping or mitigating rotational vibrations.

6. Motor vehicle transmission (G) according to Claim 4 or 5, **characterized in that** the motor vehicle transmission (G) is provided for a drivetrain which is aligned so as to be transverse to the travel direction of a motor vehicle.

7. Motor vehicle transmission (G) according to one of Claims 4 to 6, **characterized in that** the housing (GG) has an interface (G1) for an internal combustion engine (VM), wherein the second bearing (L2) is disposed so as to be closer to the interface (G1) than the first bearing (L1).

8. Drivetrain for a motor vehicle, **characterized by** a differential (AG) according to one of Claims 1 to 3, or by a motor vehicle transmission (G) according to one of Claims 4 to 7.

## Revendications

1. Différentiel (AG) destiné à une transmission de véhicule automobile (G), le différentiel (AG) comportant un premier arbre de sortie (OS1) muni d'une interface de transmission de couple (SP1) destinée à un premier arbre latéral (DS1) et un deuxième arbre de sortie (OS2) muni d'une interface de transmission de couple (SP2) destinée à un deuxième arbre latéral (DS2), l'interface de transmission de couple (SP1) du premier arbre de sortie (OS1) étant conçue sous la forme d'une denture intérieure,
**caractérisé en ce que** l'interface de transmission de couple (SP2) du deuxième arbre de sortie (OS2) est conçue comme une denture extérieure.

2. Différentiel (AG) selon la revendication 1, **caractérisé en ce que** les premier et deuxième arbres de sortie (OS1, OS2) sont guidés en rotation dans une cage de différentiel (K) qui est supportée en rotation au moyen d'un premier et d'un deuxième palier (L1, L2), le premier palier (L1) supportant un côté de la cage de différentiel (K) qui est associé au premier arbre de sortie (OS1), le deuxième palier (L2) supportant un côté de la cage de différentiel (K) qui est associé au deuxième arbre de sortie (OS2), le deuxième palier (L2) ayant un diamètre extérieur inférieur à celui du premier palier (L1).

3. Différentiel (AG) selon la revendication 1 ou la revendication 2, **caractérisé en ce que** le premier arbre de sortie (OS1) est réalisé sous la forme d'un arbre creux, le deuxième arbre de sortie (OS2) étant réalisé sous la forme d'un arbre plein.

4. Transmission de véhicule automobile (G), **caractérisée par** un différentiel (AG) selon l'une des revendications 1 à 3, lequel est reçu dans un boîtier (GG) de la transmission de véhicule automobile (G).

5. Transmission de véhicule automobile (G) selon la revendication 4 en référence à la revendication 2, **caractérisée en ce que** le deuxième palier (L2) est supporté au niveau d'une portion (GG1) du boîtier (GG), laquelle enferme au moins partiellement un embrayage, un double embrayage, un triple embrayage et/ou un dispositif de la transmission de véhicule automobile (G) pour amortir ou supprimer des vibrations de torsion.

6. Transmission de véhicule automobile (G) selon la revendication 4 ou 5, **caractérisée en ce que** la transmission de véhicule automobile (G) est prévue pour une chaîne cinématique orientée transversalement au sens de marche d'un véhicule automobile.

7. Transmission de véhicule automobile (G) selon l'une des revendications 4 à 6, **caractérisée en ce que** le boîtier (GG) comporte une interface (G1) destinée à un moteur à combustion interne (VM), le deuxième palier (L2) étant disposé plus près de l'interface (G1) que le premier palier (L1).

8. Transmission de véhicule automobile, **caractérisée par** un différentiel (AG) selon l'une des revendications 1 à 3 ou par une transmission de véhicule automobile (G) selon l'une des revendications 4 à 7.
